(19) Europäisches Patentamt
European Patent Office
Office européen des brevets

(11) **EP 1 787 154 B1**

(12) **EUROPÄISCHE PATENTSCHRIFT**

(45) Veröffentlichungstag und Bekanntmachung des Hinweises auf die Patenterteilung:
**09.07.2014   Patentblatt 2014/28**

(21) Anmeldenummer: **05787074.3**

(22) Anmeldetag: **03.09.2005**

(51) Int Cl.:
*G02B 15/14* (2006.01)    *G02B 27/00* (2006.01)

(86) Internationale Anmeldenummer:
**PCT/EP2005/009484**

(87) Internationale Veröffentlichungsnummer:
**WO 2006/027177 (16.03.2006 Gazette 2006/11)**

(54) **OBJEKTIV**

LENS SYSTEM

OBJECTIF

(84) Benannte Vertragsstaaten:
**DE GB**

(30) Priorität: **07.09.2004   DE 102004043611**
**07.09.2004   DE 202004020515 U**
**25.05.2005   DE 102005025204**

(43) Veröffentlichungstag der Anmeldung:
**23.05.2007   Patentblatt 2007/21**

(73) Patentinhaber: **Carl Zeiss AG**
**73447 Oberkochen (DE)**

(72) Erfinder:
• **KLEIN, Jürgen**
**51107 Köln (DE)**
• **NOFFKE, Jürgen**
**73434 Aalen (DE)**
• **GÄNGLER, Dietmar**
**89129 Langenau (DE)**

(74) Vertreter: **Witte, Weller & Partner Patentanwälte mbB**
**Postfach 10 54 62**
**70047 Stuttgart (DE)**

(56) Entgegenhaltungen:
**US-A- 5 381 268**

## Beschreibung

Die Erfindung betrifft ein Objektiv mit einem Gehäuse, mit einer Irisblende und mit einer Mehrzahl von Linsengruppen, wobei zum Scharfstellen des Objektivs unter Minimierung der Bildwinkeländerung mindestens zwei Linsengruppen relativ zum Gehäuse bewegbar sind, und wobei ferner die eine Linsengruppe vor der Irisblende und die zweite Linsengruppe mindestens teilweise hinter der Irisblende angeordnet ist

Ein Objektiv der vorstehend genannten Art ist in dem Dokument US 4 726 669 beschrieben.

Bei Zoom-Objektiven mit mehreren Linsengruppen ist üblicherweise eine separate, vordere Linsengruppe als Fokusgruppe ausgebildet, die beim Scharfstellen bewegt wird. Diese separate Fokusgruppe arbeitet unabhängig von denjenigen Linsengruppen, die beim Zoomen den Bildmaßstab verändern. Wenn keine weiteren Maßnahmen getroffen sind, bewirkt eine Bewegung der Fokusgruppe während des Scharfstellens des Bildes jedoch, dass sich der Bildwinkel (auch Bildfeldwinkel genannt) ändert.

Zur Behebung dieses Phänomens sind bereits verschiedene Maßnahmen vorgeschlagen worden, bei denen die Fokusgruppe in zwei Linsengruppen aufgeteilt wird, die nach bestimmten Regeln bewegt werden.

In dem Dokument DE 79 08 085 U1 sind mehrere derartige Konzepte beschrieben, bei denen diese beiden Linsengruppen vor der Irisblende des Objektivs angeordnet sind. Bei einer ersten Variante wird eine Linsengruppe der Fokusgruppe fest gehalten und nur die andere bewegt. Bei einer zweiten Variante werden beide Linsengruppen beim Scharfstellen gleichzeitig mit unterschiedlichem Vorschub bewegt. Dabei bleibt die Lage einer hinteren Hauptebene des Gesamtlinsensystems unverändert.

Bei einem Objektiv gemäß dem Dokument US 4,278,331 werden die beiden Linsengruppen der Fokusgruppe, die ebenfalls vor der Irisblende angeordnet sind, gegenläufig zueinander bewegt, derart, dass der Winkel zwischen einem auf die Eintrittspupille des Objektives gerichteten Lichtstrahl und der optischen Achse des Objektives während des Scharfstellens konstant bleibt.

In dem Dokument US 4,336,983 ist ein weiteres Objektiv mit Mitteln zum Verhindern einer Änderung des Bildwinkels beim Scharfstellen beschrieben. Bei diesem Objektiv wird nur eine Linsengruppe, die vor der Irisblende angeordnet ist, beim Scharfstellen bewegt. Zwei weitere Linsengruppen werden beim Scharfstellen nicht bewegt. Zwischen der zweiten und der dritten Linsengruppe ist eine Irisblende angeordnet. Der Brennpunkt der kombinierten zweiten und dritten Linsengruppe fällt dabei mit der Austrittspupille des Gesamt-Linsensystems zusammen.

Das Problem der Vermeidung von Änderungen des Bildwinkels beim Scharfstellen ist auch Gegenstand von wissenschaftlichen Veröffentlichungen, z.B. K. Tanaka "A Zoom Lens without Focus Breathing Phenomena", Proc. of SPIE Vol. 4487 (2001), Seite 63-67; I. Neil "High Performance Wide Angle Objective Lens Systems with Internal Close Focusing Optics and Multiple Aspheric Surfaces for the Visible Waveband", SPIE, Vol. 2774, Seiten 216-242; I. Neil "High Performance, Wide Angle, Macro Focus, Zoom Lens for 35mm Cinematography", SPIE Vol. 3482, Seiten 213-228.

Die bekannten Objektive der vorstehend genannten Art haben den Nachteil, dass infolge der Positionierung der bewegten Fokusgruppen vor der Irisblende negative Einflüsse hinsichtlich der Korrektur des Objektivs auftreten.

In dem Dokument US 5 381 268 A ist ein kompaktes Weitwinkel-Zoom-Objektiv beschrieben. Das Objektiv weist eine Irisblende sowie zwei relativ zum Gehäuse bewegliche Linsengruppen auf. Zwar ist eine dieser Linsengruppen vor der Irisblende und die andere teilweise hinter der Irisblende angeordnet, die Linsengruppen sind jedoch Teile des Variatorgliedes des Zoom-Objektivs und dienen nicht zum Scharfstellen.

Das Dokument DE 29 46 379 A1 beschreibt ein photographisches Objektiv mit während der Scharfeinstellung unverändertem Bildwinkel.

In dem Dokument DE 198 56 119 A1 ist ein Makrolinsensystem beschrieben, bei dem zwei unabhängig bewegliche Linsengruppen zur Fokussierung verwendet werden.

Das eingangs genannte Dokument US 4 726 669 beschreibt ein Teleobjektiv mit vier Linseneinheiten, bei dem zum Fokussieren zwei Linseneinheiten simultan bewegt werden, wobei sich eine dieser Linseneinheiten vor und die andere hinter einer Blende befindet.

Der Erfindung liegt die Aufgabe zugrunde, ein Objektiv der eingangs genannten Art dahingehend weiterzubilden, dass die vorstehend genannten Nachteile vermieden werden. Insbesondere soll das Objektiv beim Scharfstellen keine Bildwinkeländerung aufweisen, d.h. der objektseitige Bildwinkel soll bei gegebener Bildhöhe für alle Objektentfernungen gleich bleiben, ohne dass dies negative Auswirkungen auf die Möglichkeit hat, das Objektiv zu korrigieren.

Bei einem Objektiv der eingangs genannten Art wird diese Aufgabe erfindungsgemäß dadurch gelöst, dass in dem Objektiv die Bedingung:

$$f'(e) = f'(\infty)/(1 - f'(e) \cdot \beta(e)/APF)$$

mit einer maximalen Abweichung von weniger als 10% erfüllt ist, wobei

f'(e)    die Brennweite des Objektives bei Einstellung einer Objektentfernung e;

f'(∞)    die Brennweite des Objektives bei Einstellung einer Objektentfernung ∞;

β(e)    der Abbildungsmaßstab des Objektives bei Einstellung einer Objektentfernung e; und

APF    der Abstand zwischen Austrittspupille und Brennpunkt

ist.

Die der Erfindung zugrunde liegende Aufgabe wird auf diese Weise vollkommen gelöst. Durch die Anordnung einer Fokussiergruppe im hinteren Teil des Objektivs wird auf überraschend einfache Weise erreicht, dass ein leicht korrigierbares Objektiv entsteht, das keine Bildwinkeländerungen beim Scharfstellen aufweist.

Bevorzugte Ausführungsbeispiele der Erfindung sind in den Ansprüchen 2 bis 13 angegeben.

Ausführungsbeispiele der Erfindung sind in der Zeichnung dargestellt und werden in der nachfolgenden Beschreibung näher erläutert. Es zeigen

Figur 1A:    ein erstes Ausführungsbeispiel eines erfindungsgemäßen Objektives mit zwölf Linsen in vier Linsengruppen;

Figur 1B:    ein Datenblatt zum Objektiv gemäß Figur 1A;

Figur 2A:    ein zweites Ausführungsbeispiel eines erfindungsgemäßen Objektives mit dreizehn Linsen in drei Linsengruppen;

Figur 2B:    ein Datenblatt zum Objektiv gemäß Figur 2A;

Figur 3A:    ein drittes Ausführungsbeispiel eines erfindungsgemäßen Objektives mit zwölf Linsen in vier Linsengruppen;

Figur 3B:    ein Datenblatt zum Objektiv gemäß Figur 3A;

Figur 4A:    ein viertes Ausführungsbeispiel eines erfindungsgemäßen Objektives mit zwölf Linsen in vier Linsengruppen;

Figur 4B:    ein Datenblatt zum Objektiv gemäß Figur 4A.

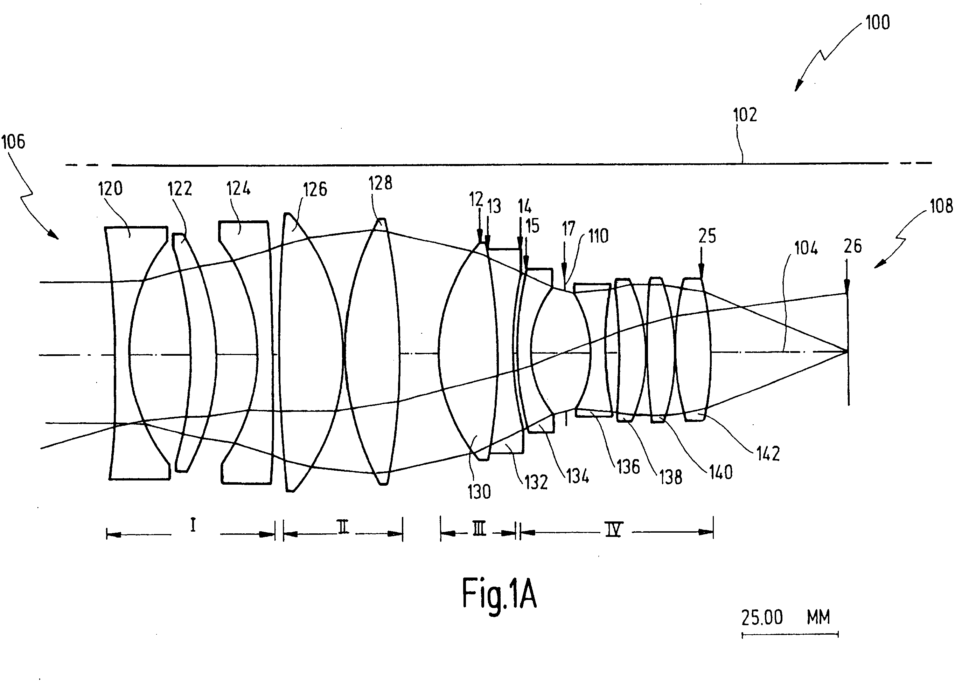

In Figur 1A bezeichnet 100 ein erstes Ausführungsbeispiel eines erfindungsgemäßen Objektivs. Das Objektiv 100 hat ein Gehäuse 102 mit einer optischen Achse 104, entlang der vier Linsengruppen I, II, III und IV angeordnet sind. Das vordere, also objektseitige Ende des Objektivs ist mit 106 und das hintere Ende mit 108 bezeichnet. Das Objektiv 100 hat eine Irisblende 110, die sich innerhalb der vierten Linsengruppe IV befindet. Die Irisblende 110 kann mit der vierten Linsengruppe IV oder mit dem Gehäuse 102 verbunden sein.

Die Linsengruppen I, II, III und IV enthalten insgesamt zwölf Linsen 120 bis 142. Davon entfallen auf die erste Linsengruppe I die Linsen 120 bis 124, auf die zweite Linsengruppe II die Linsen 126 und 128, auf die dritte Linsengruppe II die Linsen 130 und 132 und auf die vierte Linsengruppe IV die Linsen 134 bis 142.

Die ersten beiden, vorderen Linsengruppen I und II sind vorzugsweise fest im Gehäuse 102 angeordnet. Die beiden anderen Linsengruppen III und IV sind hingegen beweglich im Gehäuse 102 gelagert. Sie sind unabhängig voneinander bewegbar. Zu diesem Zweck sind beispielsweise zwei getrennte und unterschiedlich ausgebildete Führungsnuten am Umfang eines Rohres vorgesehen. Je eine dieser beiden Nuten ist Teil eines individuellen Antriebsstranges für jeweils eine der beiden Linsengruppen. Die Fokussierung wird über ein gemeinsames Betätigungselement vorgenommen. Die dazu erforderlichen Elemente sind dem Fachmann bekannt und daher in Figur 1A nicht dargestellt.

Entsprechend der üblichen Nomenklatur sind in Figur 1A die Flächen bzw. Ebenen von links beginnend mit 1... durchnummeriert, was auch für die weiter unten geschilderten anderen Ausführungsbeispiele mit anderen Anordnungen von Linsen gilt. So hat z.B. die sechste Linse 130 eine linke Fläche Nr. 12. Die sechste Linse 130 und die benachbarte siebte Linse 132 bilden eine gemeinsame Fläche Nr. 13.

Erfindungsgemäß bilden die Linsen 130 und 132 der dritten Linsengruppe III und die Linsen 134 bis 142 der vierten Linsengruppe IV die beiden Fokusgruppen, die zum Scharfstellen unabhängig voneinander bewegbar sind. Wichtig ist dabei, dass die vierte Linsengruppe IV sich teilweise hinter der Irisblende 110 befindet. Es können auch mehr als zwei Fokusgruppen vorgesehen sein.

Die Fläche Nr. 15 ist bevorzugt asphärisch ausgebildet.

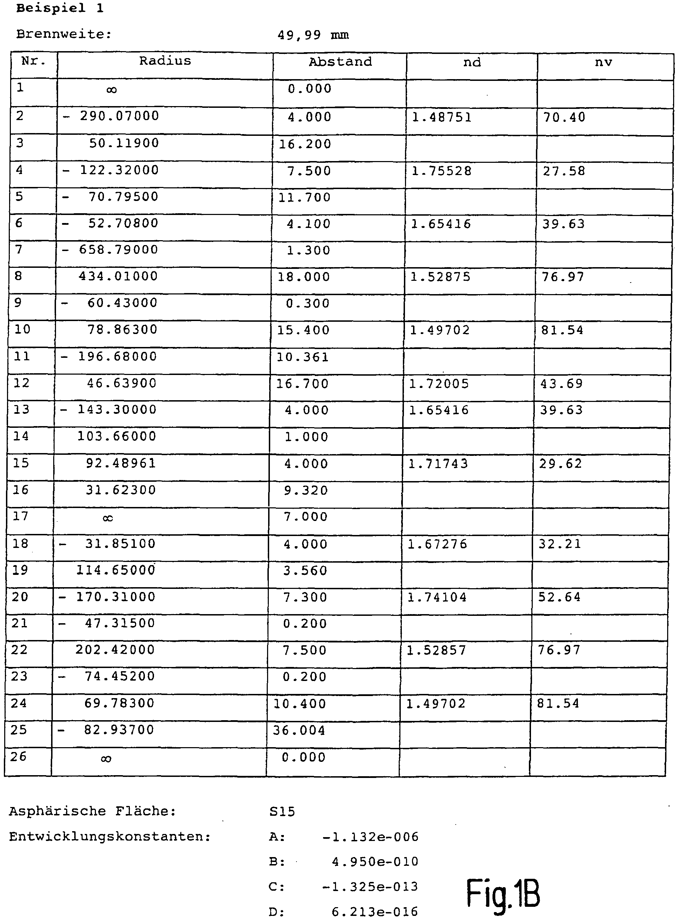

Ein bevorzugtes Ausführungsbeispiel gemäß Figur 1A weist - in der Nomenklatur des sog. "Code V" - die folgenden Daten auf, die auch in Figur 1B dargestellt sind:

Brennweite:                49,99 mm
Stop Apertur Fläche:       17
Vordere Fokusgruppe (III): Flächen 12 bis 14
Hintere Fokusgruppe (IV):  Flächen 15 bis 25

| Nr. | Radius | Abstand | nd | nv |
|-----|--------|---------|------|------|
| 1 | ∞ | 0.000 | | |
| 2 | - 290.07000 | 4.000 | 1.48751 | 70.40 |
| 3 | 50.11900 | 16.200 | | |
| 4 | - 122.32000 | 7.500 | 1.75528 | 27.58 |
| 5 | - 70.79500 | 11.700 | | |
| 6 | - 52.70800 | 4.100 | 1.65416 | 39.63 |
| 7 | - 658.79000 | 1.300 | | |
| 8 | 434.01000 | 18.000 | 1.52875 | 76.97 |
| 9 | - 60.43000 | 0.300 | | |
| 10 | 78.86300 | 15.400 | 1.49702 | 81.54 |
| 11 | - 196.68000 | 10.361 | | |
| 12 | 46.63900 | 16.700 | 1.72005 | 43.69 |
| 13 | - 143.30000 | 4.000 | 1.65416 | 39.63 |
| 14 | 103.66000 | 1.000 | | |
| 15 | 92.48961 | 4.000 | 1.71743 | 29.62 |
| 16 | 31.62300 | 9.320 | | |
| 17 | ∞ | 7.000 | | |
| 18 | - 31.85100 | 4.000 | 1.67276 | 32.21 |
| 19 | 114.65000 | 3.560 | | |
| 20 | - 170.31000 | 7.300 | 1.74104 | 52.64 |
| 21 | - 47.31500 | 0.200 | | |
| 22 | 202.42000 | 7.500 | 1.52857 | 76.97 |
| 23 | - 74.45200 | 0.200 | | |
| 24 | 69.78300 | 10.400 | 1.49702 | 81.54 |
| 25 | - 82.93700 | 36.004 | | |
| 26 | ∞ | 0.000 | | |

Asphärische Fläche:        S15
Entwicklungskonstanten:    A:    -1.132e-006
                           B:     4.950e-010
                           C:    -1.325e-013
                           D:     6.213e-016

wobei die Größen nd und vd Werkstoffkennzeichen für das jeweils verwendete Glas darstellen, nämlich nd den Refraktionsindex für eine Helium-d-Linie von 587,56 nm und vd die sog. Abbé'sche Zahl. Die Entwicklungskonstanten A bis D sind die dem Fachmann geläufigen Entwicklungskonstanten für asphärische optische Flächen (Reihenentwicklung des Kegelschnitts).

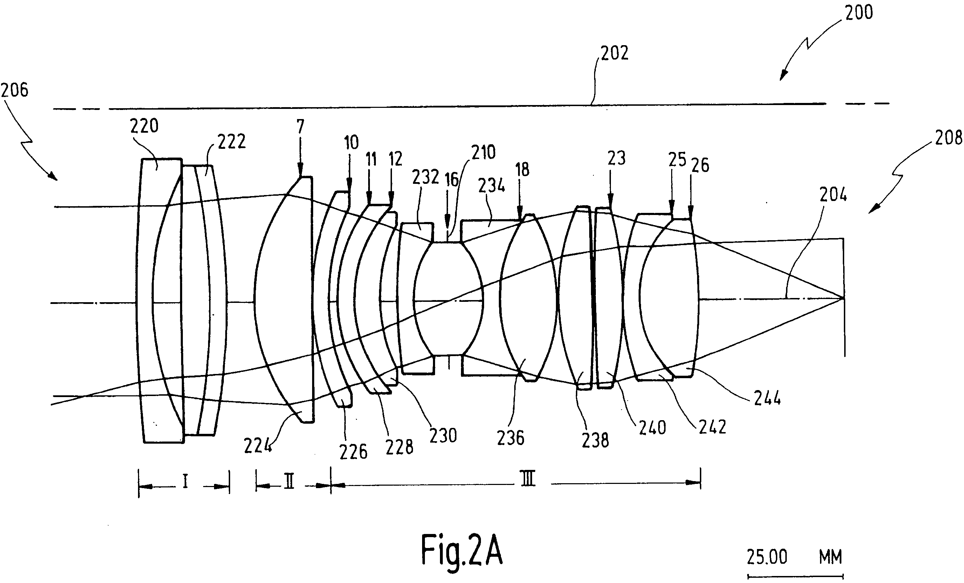

In Figur 2A bezeichnet 200 ein zweites Ausführungsbeispiel eines erfindungsgemäßen Objektives. Das Objektiv 200 hat ein Gehäuse 202 mit einer optischen Achse 204, entlang der drei Linsengruppen I, II und III angeordnet sind. Das vordere, also objektseitige Ende des Objektives ist mit 206 und das hintere Ende mit 208 bezeichnet. Das Objektiv 200 hat eine Irisblende 210, die sich innerhalb der dritten Linsengruppe III befindet. Die Irisblende 210 kann mit der dritten Linsengruppe III oder mit dem Gehäuse 202 verbunden sein.

Die Linsengruppen I, II und III enthalten insgesamt dreizehn Linsen 220 bis 244. Davon entfallen auf die erste Linsengruppe I die Linsen 220 und 222, auf die zweite Linsengruppe II die Linsen 224 und 226 und auf die dritte Linsengruppe III die Linsen 228 bis 244.

Die erste, vordere Linsengruppe I ist vorzugsweise fest im Gehäuse 202 angeordnet. Die beiden anderen Linsengruppen II und III sind hingegen beweglich im Gehäuse 202 gelagert. Sie sind unabhängig voneinander bewegbar.

Die fünfte Linse 228 und die benachbarte sechste Linse 230 bilden eine gemeinsame Fläche Nr. 12. Dies gilt entsprechend für die achte Linse 234 und die neunte Linse 236, sowie für die zwölfte Linse 242 und die dreizehnte Linse 244 mit gemeinsamen Flächen Nr. 18 bzw. Nr. 25.

Erfindungsgemäß bilden die Linsen 224 und 226 der zweiten Linsengruppe II und die Linsen 228 bis 244 der dritten Linsengruppe III die beiden Fokusgruppen, die zum Scharfstellen unabhängig voneinander bewegbar sind. Wichtig ist dabei, dass die dritte Linsengruppe III sich teilweise hinter der Irisblende 210 befindet.

Die Fläche Nr. 23 ist bevorzugt asphärisch ausgebildet.

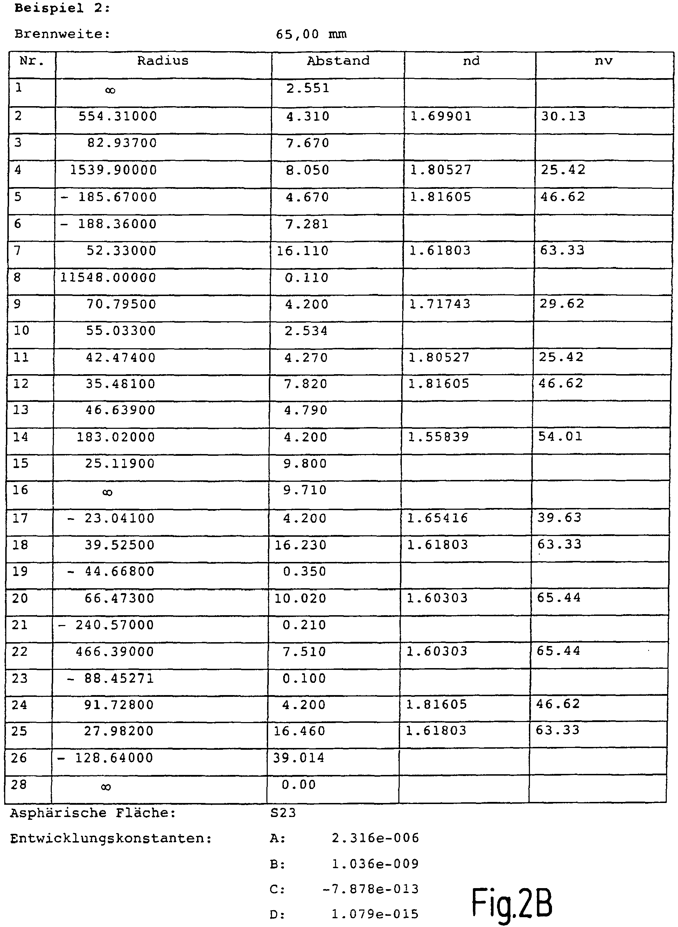

Ein bevorzugtes Ausführungsbeispiel gemäß Figur 2A weist die folgenden Daten auf, die auch in Figur 2B dargestellt sind:

| | |
|---|---|
| Brennweite: | 65,00 mm |
| Stop Apertur Fläche: | 16 |
| Vordere Fokusgruppe (II): | Flächen 7 bis 10 |
| Hintere Fokusgruppe (III): | Flächen 11 bis 26 |

| Nr. | Radius | Abstand | nd | nv |
|---|---|---|---|---|
| 1 | ∞ | 2.551 | | |
| 2 | 554.31000 | 4.310 | 1.69901 | 30.13 |
| 3 | 82.93700 | 7.670 | | |
| 4 | 1539.90000 | 8.050 | 1.80527 | 25.42 |
| 5 | - 185.67000 | 4.670 | 1.81605 | 46.62 |
| 6 | - 188.36000 | 7.281 | | |
| 7 | 52.33000 | 16.110 | 1.61803 | 63.33 |
| 8 | 11548.00000 | 0.110 | | |
| 9 | 70.79500 | 4.200 | 1.71743 | 29.62 |
| 10 | 55.03300 | 2.534 | | |
| 11 | 42.47400 | 4.270 | 1.80527 | 25.42 |
| 12 | 35.48100 | 7.820 | 1.81605 | 46.62 |
| 13 | 46.63900 | 4.790 | | |
| 14 | 183.02000 | 4.200 | 1.55839 | 54.01 |
| 15 | 25.11900 | 9.800 | | |
| 16 | ∞ | 9.710 | | |
| 17 | - 23.04100 | 4.200 | 1.65416 | 39.63 |
| 18 | 39.52500 | 16.230 | 1.61803 | 63.33 |

(fortgesetzt)

| Nr. | Radius | Abstand | nd | nv |
|---|---|---|---|---|
| 19 | - 44.66800 | 0.350 | | |
| 20 | 66.47300 | 10.020 | 1.60303 | 65.44 |
| 21 | - 240.57000 | 0.210 | | |
| 22 | 466.39000 | 7.510 | 1.60303 | 65.44 |
| 23 | - 88.45271 | 0.100 | | |
| 24 | 91.72800 | 4.200 | 1.81605 | 46.62 |
| 25 | 27.98200 | 16.460 | 1.61803 | 63.33 |
| 26 | - 128.64000 | 39.014 | | |
| | | | | |
| 28 | ∞ | 0.00 | | |

Asphärische Fläche: S23
Entwicklungskonstanten: A: 2.316e-006
B: 1.036e-009
C: -7.878e-013
D: 1.079e-015

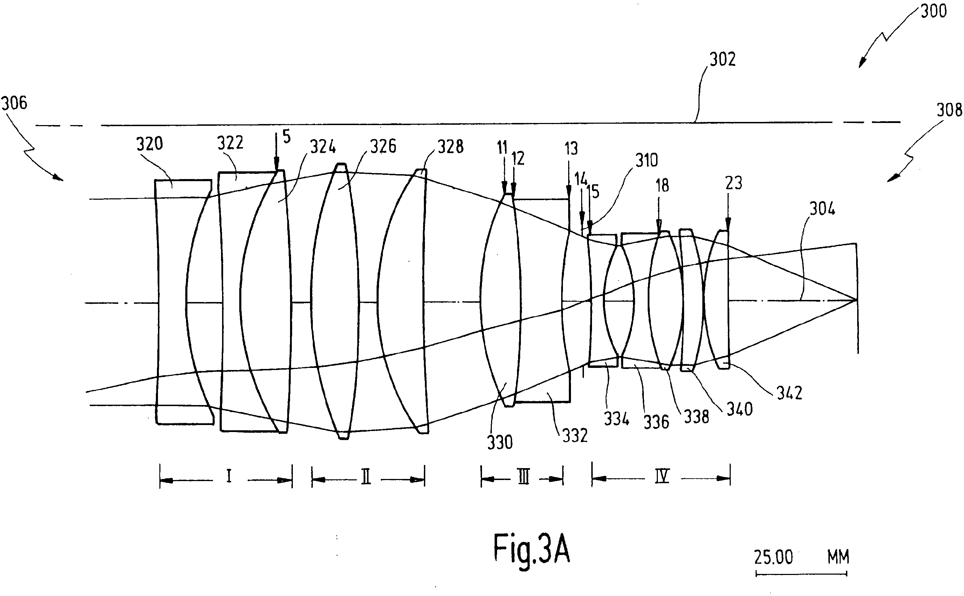

In Figur 3A bezeichnet 300 ein drittes Ausführungsbeispiel eines erfindungsgemäßen Objektives. Das Objektiv 300 hat ein Gehäuse 302 mit einer optischen Achse 304, entlang der vier Linsengruppen I, II, III und IV angeordnet sind. Das vordere, also objektseitige Ende des Objektives ist mit 306 und das hintere Ende mit 308 bezeichnet. Das Objektiv 300 hat eine Irisblende 310, die sich vor der vierten Linsengruppe IV befindet. Die Irisblende 310 kann mit der vierten Linsengruppe IV oder mit dem Gehäuse 302 verbunden sein.

Die Linsengruppen I, II, III und IV enthalten insgesamt zwölf Linsen 320 bis 342. Davon entfallen auf die erste Linsengruppe I die Linsen 320 bis 324, auf die zweite Linsengruppe II die Linsen 326 und 328, auf die dritte Linsengruppe III die Linsen 330 und 332 und auf die vierte Linsengruppe IV die Linsen 334 bis 342.

Die erste und die zweite, vorderen Linsengruppen I und II sind vorzugsweise fest im Gehäuse 302 angeordnet. Die beiden anderen Linsengruppen III und IV sind hingegen beweglich im Gehäuse 302 gelagert. Sie sind unabhängig voneinander bewegbar.

Die zweite Linse 322 und die benachbarte dritte Linse 324 bilden eine gemeinsame Fläche Nr. 5. Dies gilt entsprechend für die sechste Linse 330 und die siebte Linse 332, sowie für die neunte Linse 336 und die zehnte Linse 338 mit gemeinsamen Flächen Nr. 12 bzw. Nr. 18.

Erfindungsgemäß bilden die Linsen 330 und 332 der dritten Linsengruppe III und die Linsen 334 bis 342 der vierten Linsengruppe VI die beiden Fokusgruppen, die zum Scharfstellen unabhängig voneinander bewegbar sind. Wichtig ist dabei, dass die vierte Linsengruppe IV sich hinter der Irisblende 310 befindet.

Die Fläche Nr. 15 ist bevorzugt asphärisch ausgebildet.

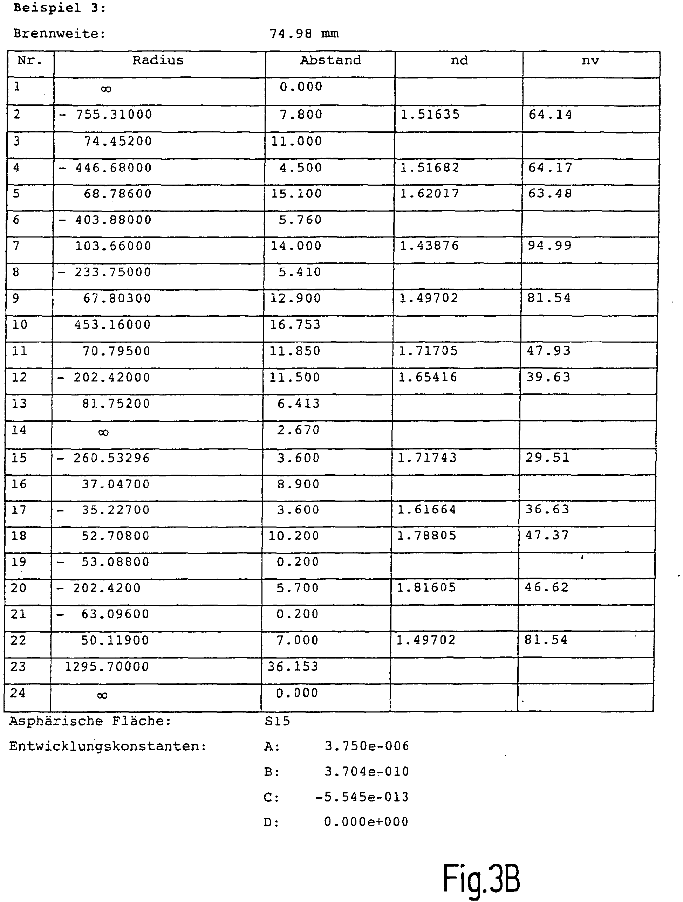

Ein bevorzugtes Ausführungsbeispiel gemäß Figur 3A weist die folgenden Daten auf, die auch in Figur 3B dargestellt sind:

Brennweite: 74.98 mm
Stop Apertur Fläche: 14
Vordere Fokusgruppe (III): Flächen 11 bis 13
Hintere Fokusgruppe (IV): Flächen 14 bis 23

| Nr. | Radius | Abstand | nd | nv |
|---|---|---|---|---|
| 1 | ∞ | 0.000 | | |

(fortgesetzt)

| Nr. | Radius | Abstand | nd | nv |
|---|---|---|---|---|
| 2 | - 755.31000 | 7.800 | 1.51635 | 64.14 |
| 3 | 74.45200 | 11.000 | | |
| 4 | - 446.68000 | 4.500 | 1.51682 | 64.17 |
| 5 | 68.78600 | 15.100 | 1.62017 | 63.48 |
| 6 | - 403.88000 | 5.760 | | |
| 7 | 103.66000 | 14.000 | 1.43876 | 94.99 |
| 8 | - 233.75000 | 5.410 | | |
| 9 | 67.80300 | 12.900 | 1.49702 | 81.54 |
| 10 | 453.16000 | 16.753 | | |
| 11 | 70.79500 | 11.850 | 1.71705 | 47.93 |
| 12 | - 202.42000 | 11.500 | 1.65416 | 39.63 |
| 13 | 81.75200 | 6.413 | | |
| 14 | ∞ | 2.670 | | |
| 15 | - 260.53296 | 3.600 | 1.71743 | 29.51 |
| 16 | 37.04700 | 8.900 | | |
| 17 | - 35.22700 | 3.600 | 1.61664 | 36.63 |
| 18 | 52.70800 | 10.200 | 1.78805 | 47.37 |
| 19 | - 53.08800 | 0.200 | | |
| 20 | - 202.4200 | 5.700 | 1.81605 | 46.62 |
| 21 | - 63.09600 | 0.200 | | |
| 22 | 50.11900 | 7.000 | 1.49702 | 81.54 |
| 23 | 1295.70000 | 36.153 | | |
| 24 | ∞ | 0.000 | | |

Asphärische Fläche: S15
Entwicklungskonstanten:
A: 3.750e-006
B: 3.704e-010
C: -5.545e-013
D: 0.000e+000

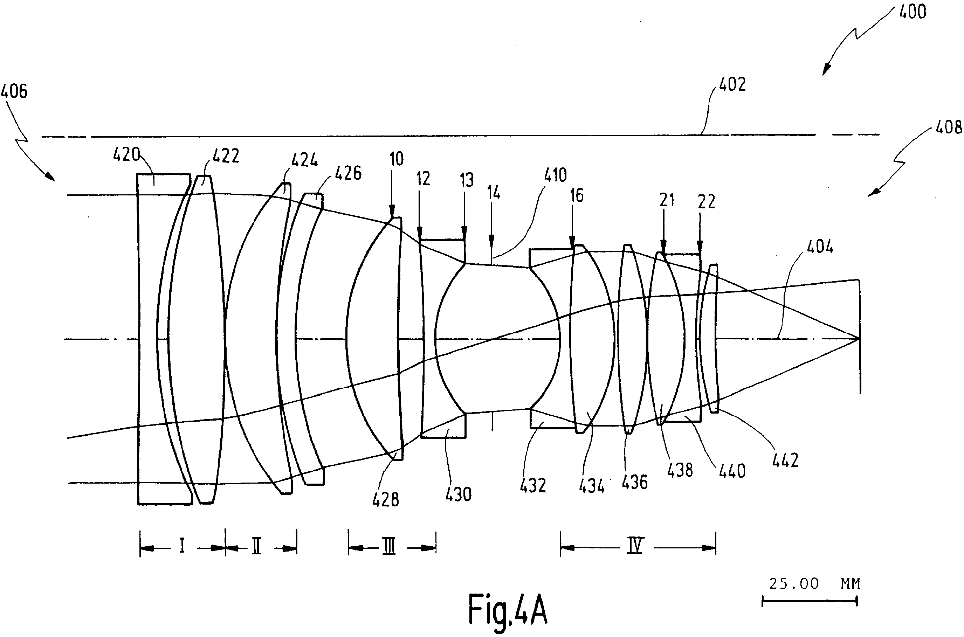

In Figur 4A bezeichnet 400 ein viertes Ausführungsbeispiel eines erfindungsgemäßen Objektives. Das Objektiv 400 hat ein Gehäuse 402 mit einer optischen Achse 404, entlang der vier Linsengruppen I, II, III und IV angeordnet sind. Das vordere, also objektseitige Ende des Objektives ist mit 406 und das hintere Ende mit 408 bezeichnet. Das Objektiv 400 hat eine Irisblende 410, die sich vor der vierten Linsengruppe IV befindet. Die Irisblende 410 kann mit der vierten Linsengruppe IV oder mit dem Gehäuse 402 verbunden sein.

Die Linsengruppen I, II, III und IV enthalten insgesamt zwölf Linsen 420 bis 442. Davon entfallen auf die erste Linsengruppe I die Linsen 420 und 422, auf die zweite Linsengruppe II die Linsen 424 und 426, auf die dritte Linsengruppe III die Linsen 428 und 430 und auf die vierte Linsengruppe IV die Linsen 432 bis 442.

Die erste und die zweite, vorderen Linsengruppen I und II sind vorzugsweise fest im Gehäuse 402 angeordnet. Die beiden anderen Linsengruppen III und IV sind hingegen beweglich im Gehäuse 402 gelagert. Sie sind unabhängig voneinander bewegbar.

Die siebte Linse 432 und die benachbarte achte Linse 434 bilden eine gemeinsame Fläche Nr. 16. Dies gilt entsprechend für die zehnte Linse 438 und die elfte Linse 440 mit gemeinsamer Fläche Nr. 21.

Erfindungsgemäß bilden die Linsen 428 und 430 der dritten Linsengruppe III und die Linsen 432 bis 442 der vierten Linsengruppe VI die beiden Fokusgruppen, die zum Scharfstellen unabhängig voneinander bewegbar sind. Wichtig ist dabei, dass die vierte Linsengruppe IV sich hinter der Irisblende 410 befindet.

Die Fläche Nr. 12 ist bevorzugt asphärisch ausgebildet.

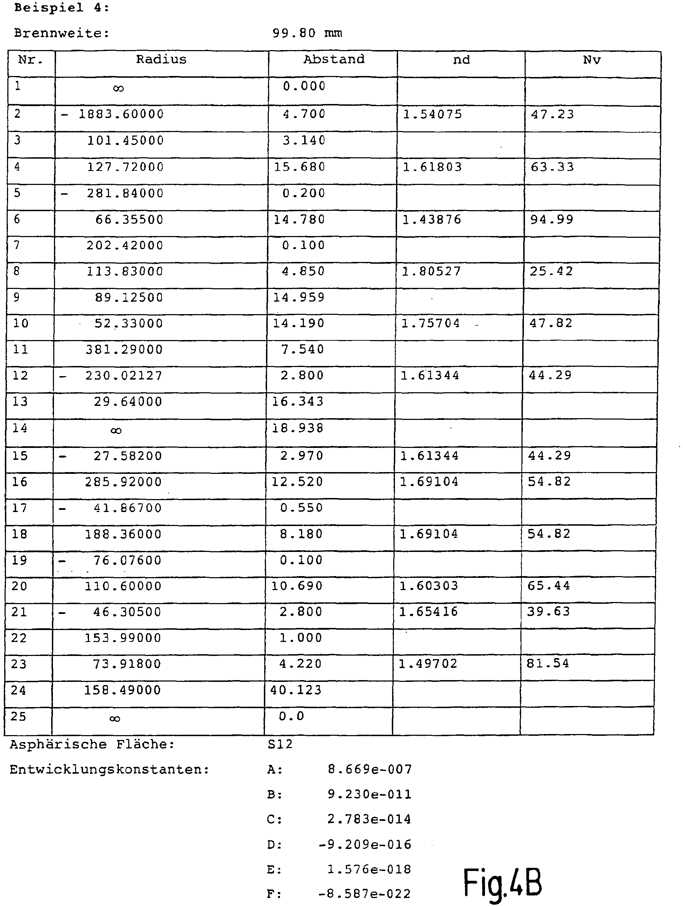

Ein bevorzugtes Ausführungsbeispiel gemäß Figur 4A weist die folgenden Daten auf, die auch in Figur 4B dargestellt sind:

| | | |
|---|---|---|
| Brennweite: | 99.80 mm |
| Stop Apertur Fläche: | 14 |
| Vordere Fokusgruppe (III): | Flächen 10 bis 13 |
| Hintere Fokusgruppe (IV): | Flächen 14 bis 22 |

| Nr. | Radius | Abstand | nd | Nv |
|---|---|---|---|---|
| 1 | ∞ | 0.000 | | |
| 2 | - 1883.60000 | 4.700 | 1.54075 | 47.23 |
| 3 | 101.45000 | 3.140 | | |
| 4 | 127.72000 | 15.680 | 1.61803 | 63.33 |
| 5 | - 281.84000 | 0.200 | | |
| 6 | 66.35500 | 14.780 | 1.43876 | 94.99 |
| 7 | 202.42000 | 0.100 | | |
| 8 | 113.83000 | 4.850 | 1.80527 | 25.42 |
| 9 | 89.12500 | 14.959 | | |
| 10 | 52.33000 | 14.190 | 1.75704 | 47.82 |
| 11 | 381.29000 | 7.540 | | |
| 12 | - 230.02127 | 2.800 | 1.61344 | 44.29 |
| 13 | 29.64000 | 16.343 | | |
| 14 | ∞ | 18.938 | | |
| 15 | - 27.58200 | 2.970 | 1.61344 | 44.29 |
| 16 | 285.92000 | 12.520 | 1.69104 | 54.82 |
| 17 | - 41.86700 | 0.550 | | |
| 18 | 188.36000 | 8.180 | 1.69104 | 54.82 |
| 19 | - 76.07600 | 0.100 | | |
| 20 | 110.60000 | 10.690 | 1.60303 | 65.44 |
| 21 | - 46.30500 | 2.800 | 1.65416 | 39.63 |
| 22 | 153.99000 | 1.000 | | |
| 23 | 73.91800 | 4.220 | 1.49702 | 81.54 |
| 24 | 158.49000 | 40.123 | | |
| 25 | ∞ | 0.0 | | |

| | | | |
|---|---|---|---|
| Asphärische Fläche: | S12 | |
| Entwicklungskonstanten: | A: | 8.669e-007 |
| | B: | 9.230e-011 |

(fortgesetzt)

| | |
|---|---|
| C: | 2.783e-014 |
| D: | -9.209e-016 |
| E: | 1.576e-018 |
| F: | -8.587e-022 |

Für alle bisher beschriebenen Ausführungsbeispiele gilt, dass die Bedingung:

$$f'(e) = f'(\infty)/(1 - f'(e) * \beta(e)/APF)$$

mit einer maximalen Abweichung von weniger als 10% erfüllt ist, wobei f'(e) die Brennweite des Objektives bei Einstellung einer Objektentfernung e, f'(∞) die Brennweite des Objektives bei Einstellung einer Objektentfernung ∞, β(e) der Abbildungsmaßstab des Objektives bei Einstellung einer Objektentfernung e, und APF der Abstand zwischen Austrittspupille und Brennpunkt ist. Das führt für die jeweiligen Linsengruppen bei den vier beschriebenen Ausführungsbeispielen zu den folgenden Werten:

Beispiel 1 (Figur 1A und 1B):

| β(e) | f'(e) | f'(∞)/(1-f'(e) * β(e)/APF) | Δ/% |
|---|---|---|---|
| 0.000 | 49.989 | 49.989 | 0.000 |
| 0.027 | 49.615 | 49.366 | 0.503 |
| 0.059 | 49.147 | 48.671 | 0.978 |
| 0.142 | 47.834 | 47.010 | 1.753 |

Beispiel 2 (Figur 2A und 2B):

| β(e) | f'(e) | f'(∞)/(1-f'(e) * β(e)/APF) | Δ/% |
|---|---|---|---|
| 0.000 | 65.000 | 65.000 | 0.000 |
| 0.074 | 64.523 | 64.169 | 0.551 |
| 0.125 | 64.216 | 63.612 | 0.950 |

Beispiel 3 (Figur 3A und 3B):

| β(e) | f'(e) | f'(∞)/(1-f'(e) * β(e)/APF) | Δ/% |
|---|---|---|---|
| 0.000 | 74.985 | 74.985 | 0.000 |
| 0.015 | 74.599 | 74.237 | 0.488 |
| 0.040 | 73.940 | 73.086 | 1.169 |
| 0.112 | 71.926 | 70.051 | 2.677 |

Beispiel 4 (Figur 4A und 4B):

| β(e) | f'(e) | f'(∞)/(1-f'(e) * β(e)/APF) | Δ/% |
|---|---|---|---|
| 0.000 | 99.797 | 99.797 | 0.000 |
| 0.019 | 98.880 | 98.652 | 0.231 |
| 0.062 | 97.122 | 96.209 | 0.950 |
| 0.114 | 95.399 | 93.311 | 2.238 |

**Patentansprüche**

1. Objektiv mit einem Gehäuse (102; 202; 302; 402), mit einer Irisblende (110; 210; 310; 410) und mit einer Mehrzahl von Linsengruppen (I, II,III, IV), wobei zum Scharfstellen des Objektivs (100; 200; 300; 400) unter Minimierung der Bildwinkeländerung mindestens zwei Linsengruppen (III/IV; II/III) relativ zum Gehäuse (102; 202; 302; 402) bewegbar sind, und wobei ferner die eine Linsengruppe (III; II) vor der Irisblende (110; 210; 310; 410) und die zweite Linsengruppe (IV; III) mindestens teilweise hinter der Irisblende (110; 210; 310; 410) angeordnet ist, **dadurch gekennzeichnet, dass** in dem Objektiv (100; 200; 300; 400) die Bedingung:

$$f'(e) = f'(\infty)/(1\text{-}f'(e) * \beta(e)/APF)$$

mit einer maximalen Abweichung von weniger als 10 % erfüllt ist, wobei

f'(e) die Brennweite des Objektives bei Einstellung einer Objektentfernung e;
f'(∞) die Brennweite des Objektives bei Einstellung einer Objektentfernung ∞;
β(e) der Abbildungsmaßstab des Objektives bei Einstellung einer Objektentfernung e; und
APF der Abstand zwischen Austrittspupille und Brennpunkt

ist.

2. Objektiv nach Anspruch 1, **dadurch gekennzeichnet, dass** es ein Zoom-Objektiv ist.

3. Objektiv nach Anspruch 1 oder 2, **dadurch gekennzeichnet, dass** das Objektiv (100) vier Linsengruppen (I, II, III, IV) mit insgesamt zwölf Linsen (120 - 142) aufweist, wobei die sechste (130) und die siebte (132) Linse eine gemeinsame Fläche (13) bilden, mit folgenden Daten:

| | |
|---|---|
| Brennweite: | 49,99 mm |
| Stop Apertur Fläche: | 17 |
| Vordere Fokusgruppe (III): | Flächen 12 bis 14 |
| Hintere Fokusgruppe (IV): | Flächen 15 bis 25 |

| Nr. | Radius | Abstand | nd | nv |
|---|---|---|---|---|
| 1 | ∞ | 0.000 | | |
| 2 | - 290.07000 | 4.000 | 1.48751 | 70.40 |
| 3 | 50.11900 | 16.200 | | |
| 4 | -122.32000 | 7.500 | 1.75528 | 27.58 |
| 5 | - 70.79500 | 11.700 | | |
| 6 | - 52.70800 | 4.100 | 1.65416 | 39.63 |
| 7 | - 658.79000 | 1.300 | | |
| 8 | 434.01000 | 18.000 | 1.52875 | 76.97 |

(fortgesetzt)

| Nr. | Radius | Abstand | nd | nv |
|---|---|---|---|---|
| 9 | - 60.43000 | 0.300 | | |
| 10 | 78.86300 | 15.400 | 1.49702 | 81.54 |
| 11 | - 196.68000 | 10.361 | | |
| 12 | 46.63900 | 16.700 | 1.72005 | 43.69 |
| 13 | - 143.30000 | 4.000 | 1.65416 | 39.63 |
| 14 | 103.66000 | 1.000 | | |
| 15 | 92.48961 | 4.000 | 1.71743 | 29.62 |
| 16 | 31.62300 | 9.320 | | |
| 17 | ∞ | 7.000 | | |
| 18 | - 31.85100 | 4.000 | 1.67276 | 32.21 |
| 19 | 114.65000 | 3.560 | | |
| 20 | - 170.31000 | 7.300 | 1.74104 | 52.64 |
| 21 | - 47.31500 | 0.200 | | |
| 22 | 202.42000 | 7.500 | 1.52857 | 76.97 |
| 23 | - 74.45200 | 0.200 | | |
| 24 | 69.78300 | 10.400 | 1.49702 | 81.54 |
| 25 | - 82.93700 | 36.004 | | |
| 26 | ∞ | 0.000 | | |

Asphärische Fläche: S15
Entwicklungskonstanten:
A: -1.132e-006
B: 4.950e-010
C: -1.325e-013
D: 6.213e-016

4. Objektiv nach Anspruch 3, **gekennzeichnet durch** die Werte:

| $\beta(e)$ | f'(e) | f'($\infty$)/(1-f'(e) * $\beta(e)$/APF) | $\Delta$/% |
|---|---|---|---|
| 0.000 | 49.989 | 49.989 | 0.000 |
| 0.027 | 49.615 | 49.366 | 0.503 |
| 0.059 | 49.147 | 48.671 | 0.978 |
| 0.142 | 47.834 | 47.010 | 1.753 |

5. Objektiv nach einem oder mehreren der Ansprüche 1 bis 4, **dadurch gekennzeichnet, dass** das Objektiv (200) drei Linsengruppen (I, II, III) mit insgesamt dreizehn Linsen (220 - 244) aufweist, wobei die fünfte (228) und die sechste (230), die achte (234) und die neunte (236) sowie die zwölfte (242) und die dreizehnte (244) Linse eine gemeinsame Fläche (12, 18, 25) bilden, mit den folgenden Daten:

Brennweite: 65,00 mm
Stop Apertur Fläche: 16

(fortgesetzt)

Vordere Fokusgruppe (II):     Flächen 7 bis 10
Hintere Fokusgruppe (III):     Flächen 11 bis 26

| Nr. | Radius | Abstand | nd | nv |
|---|---|---|---|---|
| 1 | ∞ | 2.551 | | |
| 2 | 554.31000 | 4.310 | 1.69901 | 30.13 |
| 3 | 82.93700 | 7.670 | | |
| 4 | 1539.90000 | 8.050 | 1.80527 | 25.42 |
| 5 | - 185.67000 | 4.670 | 1.81605 | 46.62 |
| 6 | - 188.36000 | 7.281 | | |
| 7 | 52.33000 | 16.110 | 1.61803 | 63.33 |
| 8 | 11548.00000 | 0.110 | | |
| 9 | 70.79500 | 4.200 | 1.71743 | 29.62 |
| 10 | 55.03300 | 2.534 | | |
| 11 | 42.47400 | 4.270 | 1.80527 | 25.42 |
| 12 | 35.48100 | 7.820 | 1.81605 | 46.62 |
| 13 | 46.63900 | 4.790 | | |
| 14 | 183.02000 | 4.200 | 1.55839 | 54.01 |
| 15 | 25.11900 | 9.800 | | |
| 16 | ∞ | 9.710 | | |
| 17 | -23.04100 | 4.200 | 1.65416 | 39.63 |
| 18 | 39.52500 | 16.230 | 1.61803 | 63.33 |
| 19 | - 44.66800 | 0.350 | | |
| 20 | 66.47300 | 10.020 | 1.60303 | 65.44 |
| 21 | - 240.57000 | 0.210 | | |
| 22 | 466.39000 | 7.510 | 1.60303 | 65.44 |
| 23 | - 88.45271 | 0.100 | | |
| 24 | 91.72800 | 4.200 | 1.81605 | 46.62 |
| 25 | 27.98200 | 16.460 | 1.61803 | 63.33 |
| 26 | -128.64000 | 39.014 | | |
| | | | | |
| 28 | ∞ | 0.00 | | |

Asphärische Fläche:          S23
Entwicklungskonstanten:   A:         2.316e-006
                                         B:         1.036e-009
                                         C:         -7.878e-013
                                         D:         1.079e-015

**6.** Objektiv nach Anspruch 5, **gekennzeichnet durch** die Werte:

| β(e) | f'(e) | f'(∞)/(1-f'(e) * β(e)/APF) | Δ/% |
|---|---|---|---|
| 0.000 | 65.000 | 65.000 | 0.000 |
| 0.074 | 64.523 | 64.169 | 0.551 |
| 0.125 | 64.216 | 63.612 | 0.950 |

**7.** Objektiv nach Anspruch 1 oder 2, **dadurch gekennzeichnet, dass** das Objektiv (300) vier Linsengruppen (I, II, III, IV) mit insgesamt 12 Linsen (320 - 342) aufweist, wobei die zweite (322) und die dritte (324), die sechste ()330) und die siebte (332), sowie die neunte (336) und die zehnte (338) Linse eine gemeinsame Fläche (5, 12, 18) bilden, mit den folgenden Daten:

Brennweite:                74.98 mm
Stop Apertur Fläche:       14
Vordere Fokusgruppe (III):  Flächen 11 bis 13
Hintere Fokusgruppe (IV):   Flächen 14 bis 23

| Nr. | Radius | Abstand | nd | nv |
|---|---|---|---|---|
| 1 | ∞ | 0.000 | | |
| 2 | - 755.31000 | 7.800 | 1.51635 | 64.14 |
| 3 | 74.45200 | 11.000 | | |
| 4 | - 446.68000 | 4.500 | 1.51682 | 64.17 |
| 5 | 68.78600 | 15.100 | 1.62017 | 63.48 |
| 6 | - 403.88000 | 5.760 | | |
| 7 | 103.66000 | 14.000 | 1.43876 | 94.99 |
| 8 | - 233.75000 | 5.410 | | |
| 9 | 67.80300 | 12.900 | 1.49702 | 81.54 |
| 10 | 453.16000 | 16.753 | | |
| 11 | 70.79500 | 11.850 | 1.71705 | 47.93 |
| 12 | - 202.42000 | 11.500 | 1.65416 | 39.63 |
| 13 | 81.75200 | 6.413 | | |
| 14 | ∞ | 2.670 | | |
| 15 | - 260.53296 | 3.600 | 1.71743 | 29.51 |
| 16 | 37.04700 | 8.900 | | |
| 17 | - 35.22700 | 3.600 | 1.61664 | 36.63 |
| 18 | 52.70800 | 10.200 | 1.78805 | 47.37 |
| 19 | - 53.08800 | 0.200 | | |
| 20 | - 202.4200 | 5.700 | 1.81605 | 46.62 |
| 21 | - 63.09600 | 0.200 | | |
| 22 | 50.11900 | 7.000 | 1.49702 | 81.54 |
| 23 | 1295.70000 | 36.153 | | |
| 24 | ∞ | 0.000 | | |

Asphärische Fläche: S15
Entwicklungskonstanten: A: 3.750e-006
B: 3.704e-010
C: -5.545e-013
D: 0.000e+000

**8.** Objektiv nach Anspruch 7, **gekennzeichnet durch** die Werte:

| β(e) | f'(e) | f'(∞)/(1-f'(e) * β(e)/APF) | Δ/% |
|---|---|---|---|
| 0.000 | 74.985 | 74.985 | 0.000 |
| 0.015 | 74.599 | 74.237 | 0.488 |
| 0.040 | 73.940 | 73.086 | 1.169 |
| 0.112 | 71.926 | 70.051 | 2.677 |

**9.** Objektiv nach Anspruch 1 oder 2, **dadurch gekennzeichnet, dass** das Objektiv (400) vier Linsengruppen (I, II, III, IV) mit insgesamt zwölf Linsen (420 - 442 aufweist, wobei die siebte (432) und die achte (434), sowie die zehnte (438) und die elfte (440) Linse eine gemeinsame Fläche (16, 21) bilden, mit den folgenden Daten:

Brennweite: 99.80 mm
Stop Apertur Fläche: 14
Vordere Fokusgruppe (III): Flächen 10 bis 13
Hintere Fokusgruppe (IV): Flächen 14 bis 22

| Nr. | Radius | Abstand | nd | Nv |
|---|---|---|---|---|
| 1 | ∞ | 0.000 | | |
| 2 | - 1883.60000 | 4.700 | 1.54075 | 47.23 |
| 3 | 101.45000 | 3.140 | | |
| 4 | 127.72000 | 15.680 | 1.61803 | 63.33 |
| 5 | - 281.84000 | 0.200 | | |
| 6 | 66.35500 | 14.780 | 1.43876 | 94.99 |
| 7 | 202.42000 | 0.100 | | |
| 8 | 113.83000 | 4.850 | 1.80527 | 25.42 |
| 9 | 89.12500 | 14.959 | | |
| 10 | 52.33000 | 14.190 | 1.75704 | 47.82 |
| 11 | 381.29000 | 7.540 | | |
| 12 | - 230.02127 | 2.800 | 1.61344 | 44.29 |
| 13 | 29.64000 | 16.343 | | |
| 14 | ∞ | 18.938 | | |
| 15 | - 27.58200 | 2.970 | 1.61344 | 44.29 |
| 16 | 285.92000 | 12.520 | 1.69104 | 54.82 |
| 17 | - 41.86700 | 0.550 | | |

# EP 1 787 154 B1

(fortgesetzt)

| Nr. | Radius | Abstand | nd | Nv |
|---|---|---|---|---|
| 18 | 188.36000 | 8.180 | 1.69104 | 54.82 |
| 19 | - 76.07600 | 0.100 | | |
| 20 | 110.60000 | 10.690 | 1.60303 | 65.44 |
| 21 | - 46.30500 | 2.800 | 1.65416 | 39.63 |
| 22 | 153.99000 | 1.000 | | |
| 23 | 73.91800 | 4.220 | 1.49702 | 81.54 |
| 24 | 158.49000 | 40.123 | | |
| 25 | $\infty$ | 0.0 | | |

Asphärische Fläche:     S12
Entwicklungskonstanten:     A:     8.669e-007
                            B:     9.230e-011
                            C:     2.783e-014
                            D:     -9.209e-016
                            E:     1.576e-018
                            F:     -8.587e-022

**10.** Objektiv nach Anspruch 9, **gekennzeichnet durch** die Werte:

| $\beta(e)$ | f'(e) | f'($\infty$)/(1-f'(e) * $\beta(e)$/APF) | $\Delta$/% |
|---|---|---|---|
| 0.000 | 99.797 | 99.797 | 0.000 |
| 0.019 | 98.880 | 98.652 | 0.231 |
| 0.062 | 97.122 | 96.209 | 0.950 |
| 0.114 | 95.399 | 93.311 | 2.238 |

**11.** Objektiv nach Anspruch 1 oder 2, **dadurch gekennzeichnet, dass** die Irisblende (110; 210) innerhalb der zweiten Linsengruppe (IV; III) des Objektivs (100; 200) angeordnet ist.

**12.** Objektiv nach Anspruch 1 oder 2, **dadurch gekennzeichnet, dass** die Irisblende (310; 410) vor der zweiten Linsengruppe (IV) des Objektivs (300; 400) ist.

**13.** Objektiv nach Anspruch 11 oder 12, **dadurch gekennzeichnet, dass** die zweite Linsengruppe (IV; III) zusammen mit der Irisblende (110; 210; 310; 410) bewegbar ist.

## Claims

**1.** An objective lens, comprising a housing (102; 202; 302; 402), an iris diaphragm (110; 210; 310; 410), and a plurality of lens groups (I, II, III, IV), wherein, for focusing said objective lens (100; 200; 300; 400) while minimizing a variation of an image angle, at least two lens groups (III/IV; II/III) are adapted to be moved relative to the housing (102; 202; 302; 402), and wherein further the one lens group (III; II) is arranged in front of the iris diaphragm (110; 210; 310; 410) and the second lens group (IV; III) is arranged at least partially behind the iris diaphragm (110; 210; 310; 410), **characterized in that** in the objective lens (100; 200; 300; 400) the condition:

$$f'(e) = f'(\infty)/(1-f'(e) * \beta(e)/APF)$$

is fulfilled with a maximum deviation of less than 10 %, wherein

f'(e) is the focal length of the objective lens when an object distance e is set;
f'($\infty$) is the focal length of the objective lens when an object Distance $\infty$ is set;
$\beta$(e) is the imaging scale of the objective lens when an object distance e is set; and
APF is the distance between the exit pupil and the focal point.

2. The objective lens of claim 1, **characterized in that** it is a zoom objective lens.

3. The objective lens of claim 1 or 2, **characterized in that** the objective lens (100) comprises four lens groups (I, II, III, IV) with a total of twelve lenses (120 - 142), wherein the sixth (130) and the seventh (132) lens form a common surface (13), with the following data:

| | | |
|---|---|---|
| Focal Length: | 49,99 mm | |
| Aperture Stop Area: | 17 | |
| Front Focus Group (III): | Surfaces 12 to 14 | |
| Rear Focus Group (IV): | Surfaces 15 to 25 | |

| No. | Radius | Distance | nd | nv |
|---|---|---|---|---|
| 1 | $\infty$ | 0.000 | | |
| 2 | - 290.07000 | 4.000 | 1.48751 | 70.40 |
| 3 | 50.11900 | 16.200 | | |
| 4 | - 122.32000 | 7.500 | 1.75528 | 27.58 |
| 5 | - 70.79500 | 11.700 | | |
| 6 | - 52.70800 | 4.100 | 1.65416 | 39.63 |
| 7 | - 658.79000 | 1.300 | | |
| 8 | 434.01000 | 18.000 | 1.52875 | 76.97 |
| 9 | - 60.43000 | 0.300 | | |
| 10 | 78.86300 | 15.400 | 1.49702 | 81.54 |
| 11 | - 196.68000 | 10.361 | | |
| 12 | 46.63900 | 16.700 | 1.72005 | 43.69 |
| 13 | - 143.30000 | 4.000 | 1.65416 | 39.63 |
| 14 | 103.66000 | 1.000 | | |
| 15 | 92.48961 | 4.000 | 1.71743 | 29.62 |
| 16 | 31.62300 | 9.320 | | |
| 17 | $\infty$ | 7.000 | | |
| 18 | - 31.85100 | 4.000 | 1.67276 | 32.21 |
| 19 | 114.65000 | 3.560 | | |
| 20 | - 170.31000 | 7.300 | 1.74104 | 52.64 |
| 21 | - 47.31500 | 0.200 | | |
| 22 | 202.42000 | 7.500 | 1.52857 | 76.97 |
| 23 | - 74.45200 | 0.200 | | |

(continued)

| No. | Radius | Distance | nd | nv |
|-----|--------|----------|------|------|
| 24 | 69.78300 | 10.400 | 1.49702 | 81.54 |
| 25 | - 82.93700 | 36.004 | | |
| 26 | ∞ | 0.000 | | |

| | | | |
|---|---|---|---|
| Aspherical surface: | S15 | | |
| Series constants: | A: | -1.132e-006 | |
| | B: | 4.950e-010 | |
| | C: | -1.325e-013 | |
| | D: | 6.213e-016 | |

4. The objective lens of claim 3, **characterized by** the values:

| $\beta(e)$ | $f'(e)$ | $f'(\infty)/(1-f'(e) * \beta(e)/APF)$ | $\Delta/\%$ |
|------|--------|----------------------------------------|-------|
| 0.000 | 49.989 | 49.989 | 0.000 |
| 0.027 | 49.615 | 49.366 | 0.503 |
| 0.059 | 49.147 | 48.671 | 0.978 |
| 0.142 | 47.834 | 47.010 | 1.753 |

5. The objective lens of any one of claims 1 through 4, **characterized in that** the objective lens (200) comprises three lens groups (I, II, III) with in total thirteen lenses (220 - 244), wherein the fifth (228) and the sixth (230), the eighth (234) and the ninth (236),as well as the twelfth (242) and the thirteenth (244) lens form a common surface (12, 18, 25), with the following data:

| | |
|---|---|
| Focal Length: | 65,00 mm |
| Aperture Stop Area: | 16 |
| Front Focus Group (II): | Surfaces 7 to 10 |
| Rear Focus Group (III): | Surfaces 11 to 26 |

| No. | Radius | Distance | nd | nv |
|-----|--------|----------|------|------|
| 1 | ∞ | 2.551 | | |
| 2 | 554.31000 | 4.310 | 1.69901 | 30.13 |
| 3 | 82.93700 | 7.670 | | |
| 4 | 1539.90000 | 8.050 | 1.80527 | 25.42 |
| 5 | - 185.67000 | 4.670 | 1.81605 | 46.62 |
| 6 | - 188.36000 | 7.281 | | |
| 7 | 52.33000 | 16.110 | 1.61803 | 63.33 |
| 8 | 11548.00000 | 0.110 | | |
| 9 | 70.79500 | 4.200 | 1.71743 | 29.62 |
| 10 | 55.03300 | 2.534 | | |
| 11 | 42.47400 | 4.270 | 1.80527 | 25.42 |

(continued)

| No. | Radius | Distance | nd | nv |
|---|---|---|---|---|
| 12 | 35.48100 | 7.820 | 1.81605 | 46.62 |
| 13 | 46.63900 | 4.790 | | |
| 14 | 183.02000 | 4.200 | 1.55839 | 54.01 |
| 15 | 25.11900 | 9.800 | | |
| 16 | ∞ | 9.710 | | |
| 17 | - 23.04100 | 4.200 | 1.65416 | 39.63 |
| 18 | 39.52500 | 16.230 | 1.61803 | 63.33 |
| 19 | - 44.66800 | 0.350 | | |
| 20 | 66.47300 | 10.020 | 1.60303 | 65.44 |
| 21 | - 240.57000 | 0.210 | | |
| 22 | 466.39000 | 7.510 | 1.60303 | 65.44 |
| 23 | - 88.45271 | 0.100 | | |
| 24 | 91.72800 | 4.200 | 1.81605 | 46.62 |
| 25 | 27.98200 | 16.460 | 1.61803 | 63.33 |
| 26 | - 128.64000 | 39.014 | | |
| | | | | |
| 28 | ∞ | 0.00 | | |

Aspherical surface: :    S23
Series constants:    A:      2.316e-006
                         B:      1.036e-009
                         C:      -7.878e-013
                         D:      1.079e-015

6. The objective lens of claim 5, **characterized by** the values:

| $\beta(e)$ | f'(e) | f'($\infty$)/(1-f'(e) * $\beta$(e)/APF) | $\Delta$/% |
|---|---|---|---|
| 0.000 | 65.000 | 65.000 | 0.000 |
| 0.074 | 64.523 | 64.169 | 0.551 |
| 0.125 | 64.216 | 63.612 | 0.950 |

7. The objective lens of claim 1 or 2, **characterized in that** the objective lens (300) comprises four lens groups (I, II, III, IV) with in total 12 lenses (320 - 342), wherein the second (322) and the third (324), the sixth (330) and the seventh (332) as well as the ninth (336) and the tenth (338) lens form a common surface (5, 12, 18), with the following data:

Focal Length:                   74.98 mm
Aperture Stop Area:       14
Front Focus Group (III):    Surfaces 11 to 13
Rear Focus Group (IV):     Surfaces 14 to 23

| No. | Radius | Distance | nd | nv |
|---|---|---|---|---|
| 1 | ∞ | 0.000 | | |
| 2 | - 755.31000 | 7.800 | 1.51635 | 64.14 |
| 3 | 74.45200 | 11.000 | | |
| 4 | - 446.68000 | 4.500 | 1.51682 | 64.17 |
| 5 | 68.78600 | 15.100 | 1.62017 | 63.48 |
| 6 | - 403.88000 | 5.760 | | |
| 7 | 103.66000 | 14.000 | 1.43876 | 94.99 |
| 8 | - 233.75000 | 5.410 | | |
| 9 | 67.80300 | 12.900 | 1.49702 | 81.54 |
| 10 | 453.16000 | 16.753 | | |
| 11 | 70.79500 | 11.850 | 1.71705 | 47.93 |
| 12 | - 202.42000 | 11.500 | 1.65416 | 39.63 |
| 13 | 81.75200 | 6.413 | | |
| 14 | ∞ | 2.670 | | |
| 15 | - 260.53296 | 3.600 | 1.71743 | 29.51 |
| 16 | 37.04700 | 8.900 | | |
| 17 | - 35.22700 | 3.600 | 1.61664 | 36.63 |
| 18 | 52.70800 | 10.200 | 1.78805 | 47.37 |
| 19 | - 53.08800 | 0.200 | | |
| 20 | - 202.4200 | 5.700 | 1.81605 | 46.62 |
| 21 | - 63.09600 | 0.200 | | |
| 22 | 50.11900 | 7.000 | 1.49702 | 81.54 |
| 23 | 1295.70000 | 36.153 | | |
| 24 | ∞ | 0.000 | | |

Aspherical surface: :  S15
Series constants:  A:  3.750e-006
  B:  3.704e-009
  C:  -5.545e-013
  D:  0.000e+000

8. The objective lens of claim 7, **characterized by** the values:

| β(e) | f'(e) | f'(∞)/(1-f'(e) * β(e)/APF) | Δ/% |
|---|---|---|---|
| 0.000 | 74.985 | 74.985 | 0.000 |
| 0.015 | 74.599 | 74.237 | 0.488 |
| 0.040 | 73.940 | 73.086 | 1.169 |
| 0.112 | 71.926 | 70.051 | 2.677 |

9. The objective lens of claim 1 or 2, **characterized in that** the objective lens (400) comprises four lens groups (I, II, III, IV) with in total twelve lenses (420 - 442), wherein the seventh (432) and the eighth (434) as well as the tenth (438) and the eleventh (440) lens form a common surface (16, 21) with the following data:

Focal Length: 99,80 mm
Aperture Stop Area: 14
Front Focus Group (III): Surfaces 10 to 13
Rear Focus Group (IV): Surfaces 14 to 22

| No. | Radius | Distance | nd | nv |
|---|---|---|---|---|
| 1 | ∞ | 0.000 | | |
| 2 | - 1883.60000 | 4.700 | 1.54075 | 47.23 |
| 3 | 101.45000 | 3.140 | | |
| 4 | 127.72000 | 15.680 | 1.61803 | 63.33 |
| 5 | - 281.84000 | 0.200 | | |
| 6 | 66.35500 | 14.780 | 1.43876 | 94.99 |
| 7 | 202.42000 | 0.100 | | |
| 8 | 113.83000 | 4.850 | 1.80527 | 25.42 |
| 9 | 89.12500 | 14.959 | | |
| 10 | 52.33000 | 14.190 | 1.75704 | 47.82 |
| 11 | 381.29000 | 7.540 | | |
| 12 | - 230.02127 | 2.800 | 1.61344 | 44.29 |
| 13 | 29.64000 | 16.343 | | |
| 14 | ∞ | 18.938 | | |
| 15 | - 27.58200 | 2.970 | 1.61344 | 44.29 |
| 16 | 285.92000 | 12.520 | 1.69104 | 54.82 |
| 17 | - 41.86700 | 0.550 | | |
| 18 | 188.36000 | 8.180 | 1.69104 | 54.82 |
| 19 | - 76.07600 | 0.100 | | |
| 20 | 110.60000 | 10.690 | 1.60303 | 65.44 |
| 21 | - 46.30500 | 2.800 | 1.65416 | 39.63 |
| 22 | 153.99000 | 1.000 | | |
| 23 | 73.91800 | 4.220 | 1.49702 | 81.54 |
| 24 | 158.49000 | 40.123 | | |
| 25 | ∞ | 0.0 | | |

Aspherical surface: S12
Series constants: A: 8.669e-007
B: 9.230e-011
C: 2.783e-014
D: -9.209e-016

(continued)

|  |  |
|---|---|
| E: | 1.576e-018 |
| F: | -8.587e-022 |

10. The objective lens of claim 9, **characterized by** the values:

| β(e) | f'(e) | f'(∞)/(1-f'(e) * β(e)/APF) | Δ/% |
|---|---|---|---|
| 0.000 | 99.797 | 99.797 | 0.000 |
| 0.019 | 98.880 | 98.652 | 0.231 |
| 0.062 | 97.122 | 96.209 | 0.950 |
| 0.114 | 95.399 | 93.311 | 2.238 |

11. The objective lens of claim 1 or 2, **characterized in that** the iris diaphragm (110; 210) is arranged within the second lens group (IV; III) of the objective lens (100; 200).

12. The objective lens of claim 1 or 2, **characterized in that** the iris diaphragm (310; 410) is arranged in front of the second lens group (IV) of the objective lens (300; 400).

13. The objective lens of claim 11 or 12, **characterized in that** the second lens group (IV; III) is movable together with the iris diaphragm (110; 210; 310; 410).

## Revendications

1. Objectif comprenant un boîtier (102 ; 202 ; 302 ; 402), un diaphragme à iris (110 ; 210 ; 310 ; 410) et une pluralité de groupes de lentilles (I, II, III, IV), sachant qu'au moins deux groupes de lentilles (III/IV ; II/III) peuvent être déplacés par rapport au boîtier (102 ; 202 ; 302 ; 402) aux fins de la mise au point de l'objectif (100 ; 200 ; 300 ; 400) en minimisant la variation angulaire de l'image, et sachant en outre que l'un des groupes de lentilles (III ; II) est disposé devant le diaphragme à iris (110 ; 210 ; 310 ; 410) et que le deuxième groupe de lentilles (IV ; III) est disposé au moins en partie derrière le diaphragme à iris (110 ; 210 ; 310 ; 410), **caractérisé en ce que** l'objectif (100 ; 200 ; 300 ; 400) répond à la condition :

$$f'(e) = f'(\infty)/(1-f'(e) * \beta(e)/APF)$$

avec un écart maximal inférieur à 10 %, sachant que

f(e) désigne la distance focale de l'objectif lors du réglage d'un éloignement d'objet e,
f'(∞) désigne la distance focale de l'objectif lors du réglage d'un éloignement d'objet ∞,
ß(e) désigne l'échelle de reproduction de l'objectif lors du réglage d'un éloignement d'objet e, et
APF désigne la distance entre la pupille de sortie et le foyer.

2. Objectif selon la revendication 1, **caractérisé en ce que** ledit objectif est un objectif à zoom.

3. Objectif selon la revendication 1 ou 2, **caractérisé en ce que** l'objectif (100) présente quatre groupes de lentilles (I, II, III, IV) dotés au total de douze lentilles (120 - 142), sachant que la sixième lentille (130) et la septième lentille (132) forment une surface (13) commune, présentant les spécificités qui suivent :

distance focale : 49,99 mm
surface à ouverture d'arrêt : 17
groupe focal avant (III) : surfaces 12 à 14
groupe focal arrière (IV) : surfaces 15 à 25

| N° | Rayon | Distance | nd | nv |
|----|-------|----------|------|------|
| 1 | ∞ | 0.000 | | |
| 2 | -290.0700 | 4.000 | 1.48751 | 70.40 |
| 3 | 50.11900 | 16.200 | | |
| 4 | -122.32000 | 7.500 | 1.75528 | 27.58 |
| 5 | -70.79500 | 11.700 | | |
| 6 | -52.70800 | 4.100 | 1.65416 | 39.63 |
| 7 | -658.79000 | 1.300 | | |
| 8 | 434.01000 | 18.000 | 1.52875 | 76.97 |
| 9 | -60.43000 | 0.300 | | |
| 10 | 78.86300 | 15.400 | 1.49702 | 81.54 |
| 11 | -196.68000 | 10.361 | | |
| 12 | 46.63900 | 16.700 | 1.72005 | 43.69 |
| 13 | -143.30000 | 4.000 | 1.65416 | 39.63 |
| 14 | 103.66000 | 1.000 | | |
| 15 | 92.48961 | 4.000 | 1.71743 | 29.62 |
| 16 | 31.62300 | 9.320 | | |
| 17 | ∞ | 7.000 | | |
| 18 | -31.85100 | 4.000 | 1.67276 | 32.21 |
| 19 | 114.65000 | 3.560 | | |
| 20 | -170.31000 | 7.300 | 10.74104 | 52.64 |
| 21 | -47,31500 | 0,200 | | |
| 22 | 202.42000 | 7.500 | 1.52857 | 76.97 |
| 23 | -74.45200 | 0.200 | | |
| 24 | 69.78300 | 10.400 | 1.49702 | 81.54 |
| 25 | -82.93700 | 36.004 | | |
| 26 | ∞ | 0.000 | | |

surface asphérique : S15
constantes de développement :

- A : -1.132e-006
- B : 4.950e-010
- C : -1.325e-013
- D : 6.213e-016.

4. Objectif selon la revendication 3, **caractérisé par** les valeurs qui suivent :

| ß(e) | f'(e) | f'(∞)/(1-f'(e) * β(e)/APF) | Δ/% |
|-------|--------|----------------------------|-------|
| 0.000 | 49.989 | 49.989 | 0.000 |
| 0.027 | 49.615 | 49.366 | 0.503 |
| 0.059 | 49.147 | 48.671 | 0.978 |

(suite)

| ß(e) | f'(e) | f'(∞)/(1-f'(e) * β(e)/APF) | Δ/% |
|---|---|---|---|
| 0.142 | 47.834 | 47.010 | 1.753 |

5. Objectif selon l'une quelconque ou plusieurs des revendications 1 à 4, **caractérisé en ce que** l'objectif (200) présente trois groupes de lentilles (I, II, III) dotés au total de treize lentilles (220 - 244), sachant que la cinquième lentille (228) et la sixième lentille (230), la huitième lentille (234) et la neuvième lentille (236) ainsi que la douzième lentille (242) et la treizième lentille (244) forment une surface (12, 18, 25) commune, présentant les spécificités qui suivent :

distance focale : 65,00 mm
surface à ouverture d'arrêt : 16
groupe focal avant (II) : surfaces 7 à 10
groupe focal arrière (III) : surfaces 11 à 26

| N° | Rayon | Distance | nd | nv |
|---|---|---|---|---|
| 1 | ∞ | 2.551 | | |
| 2 | 554.31000 | 4.310 | 1.69901 | 30.13 |
| 3 | 82.93700 | 7.670 | | |
| 4 | 1539.90000 | 8.050 | 1.80527 | 25.42 |
| 5 | -185.67000 | 4.670 | 1.81605 | 46.62 |
| 6 | -188.36000 | 7.281 | | |
| 7 | 52.33000 | 16.110 | 1.61803 | 63.33 |
| 8 | 11548.00000 | 0.110 | | |
| 9 | 70.79500 | 4.200 | 1.71743 | 29.62 |
| 10 | 55.03300 | 2.534 | | |
| 11 | 42.047400 | 4.270 | 1.80527 | 25.42 |
| 12 | 35.48100 | 7.820 | 1.81605 | 46.62 |
| 13 | 46.63900 | 4.790 | | |
| 14 | 183.02000 | 4.200 | 1.55839 | 54.01 |
| 15 | 25.11900 | 9.800 | | |
| 16 | ∞ | 9.710 | | |
| 17 | -23.04100 | 4.200 | 1.65416 | 39.63 |
| 18 | 39.52500 | 16.230 | 1.61803 | 63.33 |
| 19 | -44.66800 | 0.350 | | |
| 20 | 66.47300 | 10.020 | 1,60303 | 65.44 |
| 21 | -240.57000 | 0.210 | | |
| 22 | 466.39000 | 7.510 | 1.60303 | 65.44 |
| 23 | -88.45271 | 0.100 | | |
| 24 | 91.72800 | 4.200 | 1.81605 | 46.62 |
| 25 | 27.98200 | 16.460 | 1.61803 | 63.33 |
| 26 | -128.64000 | 39.0014 | | |
| | | | | |
| 28 | ∞ | 0,00 | | |

surface asphérique : S23 constantes de développement :

- A : 2.316e-006
- B : 1.036e-009
- C : -7.878e-013
- D : 1.079e-015.

**6.** Objectif selon la revendication 5, **caractérisé par** les valeurs qui suivent :

| ß(e) | f'(e) | f'(∞)/(1-f'(e) * β(e)/APF) | Δ/% |
|---|---|---|---|
| 0.000 | 65.000 | 65.000 | 0.000 |
| 0.074 | 64.523 | 64.169 | 0.551 |
| 0.125 | 64.216 | 63.612 | 0.950 |

**7.** Objectif selon la revendication 1 ou 2, **caractérisé en ce que** l'objectif (300) présente quatre groupes de lentilles (I, II, III, IV) dotés au total de 12 lentilles (320 -342), sachant que la deuxième lentille (322) et la troisième lentille (324), la sixième lentille (330) et la septième lentille (332), ainsi que la neuvième lentille (336) et la dixième lentille (338) forment une surface (5, 12, 18) commune, présentant les spécificités qui suivent :

distance focale : 74,98 mm
surface à ouverture d'arrêt : 14
groupe focal avant (III) : surfaces 11 à 13
groupe focal arrière (IV) : surfaces 14 à 23

| N° | Rayon | Distance | nd | nv |
|---|---|---|---|---|
| 1 | ∞ | 0.000 | | |
| 2 | -755.31000 | 7.800 | 1.51635 | 64.14 |
| 3 | 74.45200 | 11.000 | | |
| 4 | -446.68000 | 4.500 | 1.51682 | 64.17 |
| 5 | 68.78600 | 15.100 | 1.62017 | 63.48 |
| 6 | -403.88000 | 5.760 | | |
| 7 | 103.66000 | 14.000 | 1.43876 | 94.99 |
| 8 | -233.75000 | 5.410 | | |
| 9 | 67.80300 | 12.900 | 1.49702 | 81.54 |
| 10 | 453.16000 | 16.753 | | |
| 11 | 70.79500 | 11.850 | 1.71705 | 47.93 |
| 12 | -202.42000 | 11.500 | 1.65416 | 39.63 |
| 13 | 81.75200 | 6.413 | | |
| 14 | ∞ | 2.670 | | |
| 15 | -260.53296 | 3.600 | 1.71743 | 29.51 |
| 16 | 37.04700 | 8.900 | | |
| 17 | -35.22700 | 3.600 | 1.61664 | 36.63 |
| 18 | 52.70800 | 10.200 | 1.78805 | 47.37 |
| 19 | -53.08800 | 0.200 | | |
| 20 | -202.4200 | 5.700 | 1.81605 | 46.62 |

(suite)

| N° | Rayon | Distance | nd | nv |
|----|-------|----------|------|------|
| 21 | -63.09600 | 0.200 | | |
| 22 | 50.11900 | 7.000 | 1.49702 | 81.54 |
| 23 | 1295.70000 | 36.153 | | |
| 24 | ∞ | 0.000 | | |

surface asphérique : S15
constantes de développement :

- A : 3.750e-006
- B : 3.704e-010
- C : -5.545e-013
- D : 0.000e+000.

8. Objectif selon la revendication 7, **caractérisé par** les valeurs qui suivent :

| ß(e) | f(e) | f'(∞)/(1-f'(e) * β(e)/APF) | Δ/% |
|------|------|---------------------------|------|
| 0.000 | 74.985 | 74.985 | 0.000 |
| 0.015 | 74.599 | 74.237 | 0.488 |
| 0.040 | 73.940 | 73.086 | 1.169 |
| 0.112 | 71.926 | 70.051 | 2.677 |

9. Objectif selon la revendication 1 ou 2, **caractérisé en ce que** l'objectif (400) présente quatre groupes de lentilles (I, II, III, IV) dotés au total de douze lentilles (420-442), sachant que la septième lentille (432) et la huitième lentille (434) ainsi que la dixième lentille (438) et la onzième lentille (440) forment une surface commune (16, 21), présentant les spécificités qui suivent :

distance focale : 99,80 mm
surface à ouverture d'arrêt : 14
groupe focal avant (III) : surfaces 10 à 13
groupe focal arrière (IV) : surfaces 14 à 22

| N° | Rayon | Distance | nd | nv |
|----|-------|----------|------|------|
| 1 | ∞ | 0.000 | | |
| 2 | -1883.60000 | 4.700 | 1.54075 | 47.23 |
| 3 | 101.45000 | 3.140 | | |
| 4 | 127.72000 | 15.680 | 1.61803 | 63.33 |
| 5 | -281.84000 | 0.200 | | |
| 6 | 66.35500 | 14.780 | 1.43876 | 94.99 |
| 7 | 202.42000 | 0.100 | | |
| 8 | 113.83000 | 4.850 | 1.80527 | 25.42 |
| 9 | 89.12500 | 14.959 | | |
| 10 | 52.33000 | 14.190 | 1.75704 | 47.82 |
| 11 | 381.29000 | 7.540 | | |

(suite)

| N° | Rayon | Distance | nd | nv |
|---|---|---|---|---|
| 12 | -230.02127 | 2.800 | 1.61344 | 44.29 |
| 13 | 29.64000 | 16.343 | | |
| 14 | ∞ | 18.938 | | |
| 15 | -27.58200 | 2.970 | 1.61344 | 44.29 |
| 16 | 285.92000 | 12.520 | 1.69104 | 54.82 |
| 17 | -41.86700 | 0.550 | | |
| 18 | 188.36000 | 8.180 | 1.69104 | 54.82 |
| 19 | -76.07600 | 0.100 | | |
| 20 | 110.60000 | 10.690 | 1.60303 | 65.44 |
| 21 | -46.30500 | 2.800 | 1.65416 | 39.63 |
| 22 | 153.99000 | 1.000 | | |
| 23 | 73.91800 | 4.220 | 1.49702 | 81.54 |
| 24 | 158.49000 | 40.123 | | |
| 25 | ∞ | 0.0 | | |

surface asphérique : S12 constantes de développement :

- A : 8.669e-007
- B : 9.230e-011
- C : 2.783e-014
- D : -9.209e-016
- E : 1.576e-018
- F : -8.587e-022.

**10.** Objectif selon la revendication 9, **caractérisé par** les valeurs qui suivent :

| ß(e) | f'(e) | f'(∞)/(1-f'(e) * β(e)/APF) | Δ/% |
|---|---|---|---|
| 0.000 | 99.797 | 99.797 | 0.000 |
| 0.019 | 98.880 | 98.652 | 0.231 |
| 0.062 | 97.122 | 96.209 | 0.950 |
| 0.114 | 95.399 | 93.311 | 2.238 |

**11.** Objectif selon la revendication 1 ou 2, **caractérisé en ce que** le diaphragme à iris (110 ; 210) est disposé à l'intérieur du deuxième groupe de lentilles (IV ; III) de l'objectif (100 ; 200).

**12.** Objectif selon la revendication 1 ou 2, **caractérisé en ce que** le diaphragme à iris (310 ; 410) se trouve avant le deuxième groupe de lentilles (IV) de l'objectif (300 ; 400).

**13.** Objectif selon la revendication 11 ou 12, **caractérisé en ce que** le deuxième groupe de lentilles (IV ; III) peut être déplacé conjointement avec le diaphragme à iris (110 ; 210 ; 310 ; 410).

Fig.1A

25.00    MM

EP 1 787 154 B1

**Beispiel 1**

Brennweite: 49,99 mm

| Nr. | Radius | Abstand | nd | nv |
|---|---|---|---|---|
| 1 | ∞ | 0.000 | | |
| 2 | - 290.07000 | 4.000 | 1.48751 | 70.40 |
| 3 | 50.11900 | 16.200 | | |
| 4 | - 122.32000 | 7.500 | 1.75528 | 27.58 |
| 5 | - 70.79500 | 11.700 | | |
| 6 | - 52.70800 | 4.100 | 1.65416 | 39.63 |
| 7 | - 658.79000 | 1.300 | | |
| 8 | 434.01000 | 18.000 | 1.52875 | 76.97 |
| 9 | - 60.43000 | 0.300 | | |
| 10 | 78.86300 | 15.400 | 1.49702 | 81.54 |
| 11 | - 196.68000 | 10.361 | | |
| 12 | 46.63900 | 16.700 | 1.72005 | 43.69 |
| 13 | - 143.30000 | 4.000 | 1.65416 | 39.63 |
| 14 | 103.66000 | 1.000 | | |
| 15 | 92.48961 | 4.000 | 1.71743 | 29.62 |
| 16 | 31.62300 | 9.320 | | |
| 17 | ∞ | 7.000 | | |
| 18 | - 31.85100 | 4.000 | 1.67276 | 32.21 |
| 19 | 114.65000 | 3.560 | | |
| 20 | - 170.31000 | 7.300 | 1.74104 | 52.64 |
| 21 | - 47.31500 | 0.200 | | |
| 22 | 202.42000 | 7.500 | 1.52857 | 76.97 |
| 23 | - 74.45200 | 0.200 | | |
| 24 | 69.78300 | 10.400 | 1.49702 | 81.54 |
| 25 | - 82.93700 | 36.004 | | |
| 26 | ∞ | 0.000 | | |

Asphärische Fläche: S15

Entwicklungskonstanten:
A: -1.132e-006
B: 4.950e-010
C: -1.325e-013
D: 6.213e-016

**Fig.1B**

Fig.2A

25.00  MM

**Beispiel 2:**

Brennweite: 65,00 mm

| Nr. | Radius | Abstand | nd | nv |
|---|---|---|---|---|
| 1 | ∞ | 2.551 | | |
| 2 | 554.31000 | 4.310 | 1.69901 | 30.13 |
| 3 | 82.93700 | 7.670 | | |
| 4 | 1539.90000 | 8.050 | 1.80527 | 25.42 |
| 5 | − 185.67000 | 4.670 | 1.81605 | 46.62 |
| 6 | − 188.36000 | 7.281 | | |
| 7 | 52.33000 | 16.110 | 1.61803 | 63.33 |
| 8 | 11548.00000 | 0.110 | | |
| 9 | 70.79500 | 4.200 | 1.71743 | 29.62 |
| 10 | 55.03300 | 2.534 | | |
| 11 | 42.47400 | 4.270 | 1.80527 | 25.42 |
| 12 | 35.48100 | 7.820 | 1.81605 | 46.62 |
| 13 | 46.63900 | 4.790 | | |
| 14 | 183.02000 | 4.200 | 1.55839 | 54.01 |
| 15 | 25.11900 | 9.800 | | |
| 16 | ∞ | 9.710 | | |
| 17 | − 23.04100 | 4.200 | 1.65416 | 39.63 |
| 18 | 39.52500 | 16.230 | 1.61803 | 63.33 |
| 19 | − 44.66800 | 0.350 | | |
| 20 | 66.47300 | 10.020 | 1.60303 | 65.44 |
| 21 | − 240.57000 | 0.210 | | |
| 22 | 466.39000 | 7.510 | 1.60303 | 65.44 |
| 23 | − 88.45271 | 0.100 | | |
| 24 | 91.72800 | 4.200 | 1.81605 | 46.62 |
| 25 | 27.98200 | 16.460 | 1.61803 | 63.33 |
| 26 | − 128.64000 | 39.014 | | |
| 28 | ∞ | 0.00 | | |

Asphärische Fläche: S23

Entwicklungskonstanten: A: 2.316e-006

B: 1.036e-009

C: −7.878e-013

D: 1.079e-015

# Fig.2B

Fig.3A

25.00    MM

EP 1 787 154 B1

Beispiel 3:

Brennweite: 74.98 mm

| Nr. | Radius | Abstand | nd | nv |
|---|---|---|---|---|
| 1 | ∞ | 0.000 | | |
| 2 | – 755.31000 | 7.800 | 1.51635 | 64.14 |
| 3 | 74.45200 | 11.000 | | |
| 4 | – 446.68000 | 4.500 | 1.51682 | 64.17 |
| 5 | 68.78600 | 15.100 | 1.62017 | 63.48 |
| 6 | – 403.88000 | 5.760 | | |
| 7 | 103.66000 | 14.000 | 1.43876 | 94.99 |
| 8 | – 233.75000 | 5.410 | | |
| 9 | 67.80300 | 12.900 | 1.49702 | 81.54 |
| 10 | 453.16000 | 16.753 | | |
| 11 | 70.79500 | 11.850 | 1.71705 | 47.93 |
| 12 | – 202.42000 | 11.500 | 1.65416 | 39.63 |
| 13 | 81.75200 | 6.413 | | |
| 14 | ∞ | 2.670 | | |
| 15 | – 260.53296 | 3.600 | 1.71743 | 29.51 |
| 16 | 37.04700 | 8.900 | | |
| 17 | – 35.22700 | 3.600 | 1.61664 | 36.63 |
| 18 | 52.70800 | 10.200 | 1.78805 | 47.37 |
| 19 | – 53.08800 | 0.200 | | |
| 20 | – 202.4200 | 5.700 | 1.81605 | 46.62 |
| 21 | – 63.09600 | 0.200 | | |
| 22 | 50.11900 | 7.000 | 1.49702 | 81.54 |
| 23 | 1295.70000 | 36.153 | | |
| 24 | ∞ | 0.000 | | |

Asphärische Fläche: S15

Entwicklungskonstanten:
A: 3.750e-006
B: 3.704e-010
C: -5.545e-013
D: 0.000e+000

# Fig.3B

Fig.4A

Beispiel 4:

Brennweite: 99.80 mm

| Nr. | Radius | Abstand | nd | Nv |
|---|---|---|---|---|
| 1 | ∞ | 0.000 | | |
| 2 | − 1883.60000 | 4.700 | 1.54075 | 47.23 |
| 3 | 101.45000 | 3.140 | | |
| 4 | 127.72000 | 15.680 | 1.61803 | 63.33 |
| 5 | − 281.84000 | 0.200 | | |
| 6 | 66.35500 | 14.780 | 1.43876 | 94.99 |
| 7 | 202.42000 | 0.100 | | |
| 8 | 113.83000 | 4.850 | 1.80527 | 25.42 |
| 9 | 89.12500 | 14.959 | | |
| 10 | 52.33000 | 14.190 | 1.75704 | 47.82 |
| 11 | 381.29000 | 7.540 | | |
| 12 | − 230.02127 | 2.800 | 1.61344 | 44.29 |
| 13 | 29.64000 | 16.343 | | |
| 14 | ∞ | 18.938 | | |
| 15 | − 27.58200 | 2.970 | 1.61344 | 44.29 |
| 16 | 285.92000 | 12.520 | 1.69104 | 54.82 |
| 17 | − 41.86700 | 0.550 | | |
| 18 | 188.36000 | 8.180 | 1.69104 | 54.82 |
| 19 | − 76.07600 | 0.100 | | |
| 20 | 110.60000 | 10.690 | 1.60303 | 65.44 |
| 21 | − 46.30500 | 2.800 | 1.65416 | 39.63 |
| 22 | 153.99000 | 1.000 | | |
| 23 | 73.91800 | 4.220 | 1.49702 | 81.54 |
| 24 | 158.49000 | 40.123 | | |
| 25 | ∞ | 0.0 | | |

Asphärische Fläche: S12

Entwicklungskonstanten:  A:  8.669e-007

B:  9.230e-011

C:  2.783e-014

D:  −9.209e-016

E:  1.576e-018

F:  −8.587e-022

# Fig.4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4726669 A
- DE 7908085 U1
- US 4278331 A
- US 4336983 A
- US 5381268 A
- DE 2946379 A1
- DE 19856119 A1

**In der Beschreibung aufgeführte Nicht-Patentliteratur**

- **K. TANAKA.** A Zoom Lens without Focus Breathing Phenomena. *Proc. of SPIE,* 2001, vol. 4487, 63-67
- **I. NEIL.** High Performance Wide Angle Objective Lens Systems with Internal Close Focusing Optics and Multiple Aspheric Surfaces for the Visible Waveband. *SPIE,* vol. 2774, 216-242
- **I. NEIL.** High Performance, Wide Angle, Macro Focus, Zoom Lens for 35mm Cinematography. *SPIE,* vol. 3482, 213-228